# EUROPÄISCHE PATENTSCHRIFT

(11) **EP 2 696 310 B1**
(45) Veröffentlichungstag und Bekanntmachung des Hinweises auf die Patenterteilung: **18.10.2017**
(21) Anmeldenummer: 12180034.6
(22) Anmeldetag: 10.08.2012
(51) Int. Cl.: G06K 9/00, G06T 7/00

(54) **Verfahren zum Identifizieren eines Straßenrands**
Method for identifying the edge of a road
Procédé destiné à identifier un bord de route

(43) Veröffentlichungstag der Anmeldung: 12.02.2014
(73) Patentinhaber: Delphi Technologies, Inc., Troyes, Michigan 48007 (US)
(72) Erfinder: Müller, Dennis, 40699 Erkrath (DE); Nunn, Christian Markus, 42117 Wuppertal (DE); Meuter, Mirko Nicolas, 40699 Erkrath (DE); Zhao, Kun, 47059 Duisburg (DE); Iurgel, Uri, 42369 Wuppertal (DE)
(74) Vertreter: Delphi France SAS

(56) Entgegenhaltungen:
- JIAN WANG ET AL: "Unstructured road detection using hybrid features", MACHINE LEARNING AND CYBERNETICS, 2009 INTERNATIONAL CONFERENCE ON, IEEE, PISCATAWAY, NJ, USA, 12. Juli 2009 (2009-07-12), Seiten 482-486, XP031518095, ISBN: 978-1-4244-3702-3
- KING HANN LIM ET AL: "Lane Detection and Kalman-Based Linear-Parabolic Lane Tracking", INTELLIGENT HUMAN-MACHINE SYSTEMS AND CYBERNETICS, 2009. IHMSC '09. INTERNATIONAL CONFERENCE ON, IEEE, PISCATAWAY, NJ, USA, 26. August 2009 (2009-08-26), Seiten 351-354, XP031568503, ISBN: 978-0-7695-3752-8
- FOEDISCH M ET AL: "Adaptive real-time road detection using neural networks", INTELLIGENT TRANSPORTATION SYSTEMS, 2004. PROCEEDINGS. THE 7TH INTERNA TIONAL IEEE CONFERENCE ON WASHINGTON, DC, USA OCT. 3-6, 2004, PISCATAWAY, NJ, USA,IEEE, 3. Oktober 2004 (2004-10-03), Seiten 167-172, XP010772249, DOI: 10.1109/ITSC.2004.1398891 ISBN: 978-0-7803-8500-9
- Ceryen Tan ET AL: "Color Model-Based Real-Time Learning for Road Following", Proceedings of the IEEE ITSC 2006 Intelligent Transportation Systems Conference, 17. September 2006 (2006-09-17), Seiten 939-944, XP055054351, Gefunden im Internet: URL:http://ieeexplore.ieee.org/ielx5/11180 /36023/01706865.pdf?tp=&arnumber=1706865&i snumber=36023 [gefunden am 2013-02-22]
- PATRICK Y SHINZATO ET AL: "Path recognition for outdoor navigation", ROBOTICS SYMPOSIUM (LARS), 2009 6TH LATIN AMERICAN, IEEE, PISCATAWAY, NJ, USA, 29. Oktober 2009 (2009-10-29), Seiten 1-5, XP031631709, ISBN: 978-1-4244-6256-8
- JOHN C PLATT: "Probabilistic Outputs for Support Vector Machines and Comparisons to Regularized Likelihood Methods", ADVANCES IN LARGE MARGIN CLASSIFIERS, X, XX, 26 March 1999 (1999-03-26), page 11pp, XP009077501,

## Beschreibung

Die vorliegende Erfindung betrifft ein Verfahren zum Identifizieren eines Straßenrands mittels einer an einem Kraftfahrzeug angeordneten Bilderfassungseinrichtung, wobei mittels der Bilderfassungseinrichtung nacheinander jeweils mehrere Bildpunkte umfassende Bilder eines vor dem Kraftfahrzeug befindlichen Verkehrsraums erfasst werden.

Das bildgestützte Erkennen von Objekten in einem Verkehrsraum ist für verschiedene Arten von Fahrerassistenzsystemen in modernen Kraftfahrzeugen bedeutsam. Beispielsweise kann ein Spurhalteassistent (lane departure warning, LDW) das Erkennen von Fahrspurmarkierungen dazu verwenden, die Position des Kraftfahrzeugs innerhalb der Fahrspur zu bestimmen und bei einem zu starken Annähern an den Fahrspurrand ein Warnsignal auszugeben. Es sind auch Systeme zur Spurhalteunterstützung (lane keeping support, LKS) bekannt, welche das Halten der aktuellen Fahrspur durch kontinuierlichen Lenk-, Brems- und/oder Antriebsstrangeingriff unterstützen. Systeme zur abstandsabhängigen Fahrgeschwindigkeitsregelung (adaptive cruise control, ACC), zur Gefahrenbremsung (collision imminent braking, CIB) sowie zur Abstandswarnung (following distance indication, FDI) sind weitere Beispiele für Fahrerassistenzsysteme, welche von dem zuverlässigen Erkennen der Lage einer Fahrbahn oder Fahrspur abhängen.

Der Aufsatz von King Hann Lim et al.: "Lane Detection and Kalman-Based Linear-Parabolic Lane Tracking", IEEE International Conference on Intelligent Human-Machine Systems and Cybernetics, 2009, Seiten 351-354, offenbart ein Verfahren zum Detektieren und Verfolgen von Fahrspurmarkierungen unter Verwendung eines Kalman-Filters.

Im Allgemeinen sind moderne Bilderfassungssysteme in der Lage, Fahrspurmarkierungen auf einer Straßenoberfläche zuverlässig zu erkennen und daraus die Lage der Fahrspur zu ermitteln. Dies liegt insbesondere an der guten Sichtbarkeit solcher Fahrspurmarkierungen, welche im Allgemeinen kontrastreich und scharf begrenzt sind. Allerdings sind derartige Markierungen nicht immer vorhanden. Insbesondere bei kleineren Straßen liegt häufig eine markierungsfreie Fahrbahn vor, welche direkt in einen unbefestigten Außenraum übergeht. Aufgrund der Vielzahl an möglichen Bildmustern am Übergang zwischen der Fahrbahnoberfläche und dem Außenraum ist es in derartigen Situationen schwierig, den Straßenrand mittels eines Bilderfassungssystems zu ermitteln. Gängige Verfahren zur Fahrspurerkennung können in diesem Fall versagen, was umso kritischer ist, als ein Abfahren von der Straße auf unbefestigten Grund im Allgemeinen gefährlicher ist als das Wechseln zwischen zwei verschiedenen Fahrspuren.

Auf dem Fachgebiet sind auch Verfahren zum bildgestützten Erkennen von unmarkierten Straßen bekannt. Derartige Verfahren sind in dem Aufsatz von Jian Wang et al.: "Unstructured road detection using hybrid features", IEEE International Conference on Machine Learning and Cybernetics, 2009, Seiten 482-486, dem Aufsatz von Foedisch et al.: "Adaptive real-time road detection using neural networks", IEEE International Conference on Intelligent Transportation Systems, 2004, Seiten 167-172, dem Aufsatz von Ceryen Tan et al.: "Color Model-Based Real-Time Learning for Road Following", IEEE Intelligent Transportation Systems Conference, 2006, Seiten 939-944 und dem Aufsatz von Patrick Y Shinzato et al.: "Path recognition for outdoor navigation", IEEE 6th Latin American Robotics Symposium (LARS), Seiten 1-5, offenbart.

Der Aufsatz von John C. Platt: "Probabilistic Outputs for Support Vector Machines and Comparisons to Regularized Likelihood Methods", Advances in Large Margin Classifiers, MIT Press, 1999, offenbart ein Klassifizierungsverfahren, das auf einem parametrischen Modell beruht.

Es ist eine Aufgabe der Erfindung, ein vereinfachtes und besonders robustes Identifizieren eines Straßenrands bei fehlenden Fahrspurmarkierungen zu ermöglichen.

Die Lösung der Aufgabe erfolgt durch ein Verfahren mit den Merkmalen des Anspruchs 1. Ein erfindungsgemäßes Verfahren zum Identifizieren eines Straßenrands sieht vor, dass wenigstens ein Teil eines erfassten Bildes in mehrere Bildbereiche unterteilt wird, für jeden Bildbereich anhand von Intensitätswerten der dem Bildbereich zugeordneten Bildpunkte wenigstens ein Bildmerkmal ermittelt wird, für jeden Bildbereich anhand von A-priori-Informationen eine Wahrscheinlichkeit ermittelt wird, mit welcher der Bildbereich zu einer Eigenfahrbahn gehört, auf welcher sich das Kraftfahrzeug gerade befindet, in Abhängigkeit von den Bildmerkmalen und Wahrscheinlichkeiten aller Bildbereiche ein charakteristischer Wert für das oder jedes Bildmerkmal eines Bildbereichs ermittelt wird, das für die Eigenfahrbahn charakteristisch ist, jeder Bildbereich anhand eines Vergleichs des für diesen Bildbereich ermittelten Bildmerkmals mit dem entsprechend ermittelten charakteristischen Wert einer in dem Verkehrsraum befindlichen Straße oder einem nicht zu der Straße gehörenden Außenbereich des Verkehrsraums zugeordnet wird, und durch die Zuordnung der Bildbereiche ein Straßenrand identifiziert wird.

Als A-priori-Informationen werden Parameter der Bilderfassungseinrichtung, eine erfasste Geschwindigkeit des Kraftfahrzeugs und ein erfasster Gierwinkel des Kraftfahrzeugs verwendet. Beispielsweise können intrinsische Parameter der Bilderfassungseinrichtung, wie z.B. die Brennweite eines Kamera-Objektivs, sowie extrinsische Parameter der Bilderfassungseinrichtung, wie z.B. deren Neigungswinkel oder Schwenkwinkel, aus einem Speicher abgerufen werden. Sensoren zur Erfassung der Geschwindigkeit und des Gierwinkels des Kraftfahrzeugs sind häufig ohnehin als Eingabesensoren für andere Fahrzeugsysteme vorhanden und können somit in vorteilhafter Weise für die Schätzung der Lage der Eigenfahrbahn genutzt werden.

Erfindungsgemäß wurde insbesondere erkannt, dass bestimmte Bereiche eines erfassten Bildes aufgrund der geometrischen Gegebenheiten mit vergleichsweise hoher Wahrscheinlichkeit die Eigenfahrbahn darstellen. Diese Bereiche können dazu verwendet werden, das typische Aussehen der Fahrbahnoberfläche unter den aktuellen Gegebenheiten, wie z.B. der Art der Fahrbahn und dem Wetter, zu ermitteln. Anschließend können alle vorhandenen Bildbereiche darauf hin überprüft werden, ob sie diesem typischen Erscheinungsbild ähnlich sind. Falls die Übereinstimmung gut ist, kann davon ausgegangen werden, dass der betreffende Bildbereich eine Fahrbahnoberfläche darstellt, also der Straße zugehörig ist. Falls jedoch eine relative große Abweichung zwischen dem aktuellen Erscheinungsbild und dem für die Eigenfahrbahn typischen Erscheinungsbild vorliegt, ist davon auszugehen, dass der betreffende Bildbereich keine Fahrbahnoberfläche darstellt und somit dem Außenraum zuzuordnen ist. Im Ergebnis werden "Fahrbahn-Bereiche" und "Nicht-Fahrbahn-Bereiche" voneinander unterschieden. Es ist darauf hinzuweisen, dass bei dieser Zuordnung nicht nur die Eigenfahrbahn gekennzeichnet wird, sondern die gesamte Straße. Der Straßenrand kann dann als diejenige Linie identifiziert werden, welche die der Straße zugeordneten Bildbereiche von den dem Außenraum zugeordneten Bildbereichen trennt. Auf diese Weise ist auch bei fehlenden Fahrbahnmarkierungen eine zuverlässige Erkennung eines Straßenrands möglich.

Weiterbildungen der Erfindung sind in den abhängigen Ansprüchen, der Beschreibung sowie der beigefügten Zeichnung angegeben.

Vorzugsweise wird für jeden Bildbereich ein das Erscheinungsbild und/oder die Textur des Bildbereichs beschreibendes Bildmerkmal ermittelt. Die Beschreibung des Erscheinungsbilds bzw. der Textur eines Bildbereichs kann über Helligkeits- oder Kontrastangaben erfolgen. Es können jedoch auch komplexere Kenngrößen für die Intensitätsverteilung innerhalb des Bildbereichs und/oder Kombinationen von Kenngrößen in das zugehörige Bildmerkmal einfließen.

Gemäß einer Ausführungsform der Erfindung wird für jeden Bildbereich ein Satz von mehreren Bildmerkmalen ermittelt, wobei das Zuordnen der Bildbereiche anhand eines Vergleichs der Bildmerkmale eines Satzes von Bildmerkmalen mit jeweiligen charakteristischen Werten erfolgt. Auf diese Weise kann eine exaktere Beschreibung des Erscheinungsbilds eines der Fahrbahn zugehörigen Bildbereichs und somit eine zuverlässigere Unterscheidung zwischen Straße und Außenbereich vorgenommen werden. Bevorzugt wird für jeden Bildbereich ein Satz von wenigstens 5 und besonders bevorzugt von wenigstens 10 Bildmerkmalen ermittelt.

Als Bildmerkmale können auch die Koeffizienten einer auf die Intensitätswerte der dem betreffenden Bildbereich zugeordneten Bildpunkte angewendeten Zeit-Frequenz-Transformation, insbesondere einer Haar-Wavelet-Transformation, ermittelt werden. Dieses Vorgehen hat sich als besonders günstig herausgestellt. Alternativ oder zusätzlich können auch gradientenbasierte Histogramme, gewichtete Histogramme und/oder weitere Intensitätsverteilungsgrößen als Bildmerkmale ermittelt werden.

Gemäß einer weiteren Ausführungsform der Erfindung wird zum Ermitteln des charakteristischen Werts eines Bildmerkmals eine statistische Analyse der jeweiligen Bildmerkmale aller Bildbereiche eines Bildes und/oder der jeweiligen Bildmerkmale von Bildbereichen mehrerer nacheinander erfasster Bilder durchgeführt. Durch eine derartige statistische Analyse kann die Robustheit des Verfahrens erhöht werden. Besonders stabile Ergebnisse können mit einer Mehrfachstatistik, das heißt einer Kombination aus zeitlicher und räumlicher Statistik, erzielt werden.

Bei dem Durchführen der statistischen Analyse kann insbesondere ein Mittelwert, eine Standardabweichung, eine Varianz und/oder ein Moment der Verteilung der jeweiligen Bildmerkmale für einander entsprechende Bildbereiche mehrerer nacheinander erfasster Bilder ermittelt werden. Dies hat sich hinsichtlich der Robustheit des Verfahrens als besonders effektiv erwiesen.

Bevorzugt wird das erfasste Bild oder der Teil des erfassten Bildes gitter-oder rasterartig unterteilt. Eine solche Unterteilung kann besonders einfach durchgeführt werden.

Weiterhin kann in einem zu unterteilenden Bild eine Horizontlinie bestimmt werden, wobei nur derjenige Teil des Bildes in mehrere Bildbereiche unterteilt wird, der sich unterhalb der bestimmten Horizontlinie befindet. Hierdurch kann der Rechenaufwand des Verfahrens verringert werden. Eine Verfälschung des Ergebnisses ist hierbei nicht zu befürchten, da oberhalb der Horizontlinie im Allgemeinen nicht mit einer Fahrbahnoberfläche zu rechnen ist.

Vorzugsweise wird das Bild oder der Teil des Bildes in wenigstens 100 Bildbereiche unterteilt, um eine ausreichend exakte Erkennung des Straßenrands zu ermöglichen.

Gemäß einer bevorzugten Ausführungsform der Erfindung wird das Zuordnen der Bildbereiche mittels eines Klassifizierers durchgeführt. Ein Klassifizierer ist insbesondere in der Lage, eine Vielzahl von Bildmerkmalen in unterschiedlicher Weise beim Unterscheiden von Straßenbereichen und Außenraumbereichen zu berücksichtigen. Vorzugsweise wird der Klassifizierer offline eingelernt. Dies kann beispielsweise anhand von Filmsequenzen erfolgen, welche typische Verkehrsräume mit bekannten Straßenrändern zeigen. Der Lernprozess des Klassifizierers muss dann während des Betriebs des Kraftfahrzeugs nicht online zur Verfügung stehen, so dass das Verfahren wesentlich effizienter ausgeführt werden kann. Insbesondere kann der Klassifizierer ein neuronales Netz und/oder eine Support Vector Machine verwenden.

Gemäß einer weiteren Ausführungsform der Erfindung wird der Verlauf des Straßenrands der Straße geschätzt, indem eine Trennlinie ermittelt wird, welche im Wesentlichen zwischen den der Straße zugeordneten Bildbereichen und den dem Außenbereich zugeordneten Bildbereichen eines Bildes verläuft. Mit anderen Worten werden alle Bildbereiche als "zur Straße gehörig" oder "zum Außenbereich gehörig" markiert und es wird diejenige Hyperebene ermittelt, welche am besten die als "Straße" gekennzeichneten Bildbereiche von den als "Außenbereich" gekennzeichneten Bildbereichen trennt.

Das Schätzen des Verlaufs des Straßenrands kann beispielsweise unter Verwendung einer Radon-Transformation erfolgen. Eine Radon-Transformation ist eine Variante einer Hough-Transformation, welche ein gegebenes mehrdimensionales Signal entlang einer spezifizierten Richtung integriert. Eine zweidimensionale Radon-Transformation, welche einen Winkel und einen Offset-Wert für die Randlinie verwendet, wird dazu verwendet, den wahrscheinlichsten Straßenrand zu finden.

Der identifizierte Straßenrand wird vorzugsweise mittels eines Tracking-Verfahrens verfolgt. Hierfür kann insbesondere ein Kalman-Filter verwendet werden.

Gegenstand der Erfindung ist auch ein Computerprogrammprodukt mit Programmcodemitteln, die auf einem computerlesbaren Datenträger gespeichert sind, um das vorstehend beschriebene Verfahren durchzuführen, wenn das Computerprogramm auf einem Computer oder einer entsprechenden Recheneinheit ausgeführt wird.

Unter einem Computer wird hierbei eine beliebige Datenverarbeitungseinrichtung verstanden, mit der das Verfahren ausgeführt werden kann.

Dabei kann eine solche Datenverarbeitungseinrichtung insbesondere digitale Signalprozessoren und/oder Mikroprozessoren umfassen, mit denen das Verfahren ganz oder in Teilen ausgeführt wird.

Schließlich ist Gegenstand der Erfindung auch eine Vorrichtung zum Identifizieren eines Straßenrands, mit einer an einem Kraftfahrzeug angeordneten Bilderfassungseinrichtung, welche in der Lage ist, nacheinander jeweils mehrere Bildpunkte umfassende Bilder eines vor dem Kraftfahrzeug befindlichen Verkehrsraums zu erfassen, und einer mit der Bilderfassungseinrichtung verbundenen Datenverarbeitungseinrichtung, die zur Durchführung eines wie vorstehend beschriebenen Verfahrens ausgebildet ist.

Die Erfindung wird im Folgenden anhand von Ausführungsbeispielen unter Bezugnahme auf die Zeichnungen beschrieben.
- Fig. 1: zeigt ein Kraftfahrzeug, an welchem eine Bilderfas-sungseinrichtung angeordnet ist.
- Fig. 2: zeigt ein beispielhaftes Bild eines Verkehrsraums, wel-ches durch die Bilderfassungseinrichtung gemäß Fig. 1 erfasst wurde, wobei ein unterhalb einer Horizontlinie befindlicher Bereich des Bildes rasterartig in mehrere Bildbereiche unterteilt ist.
- Fig. 3: zeigt das Bild gemäß Fig. 2, wobei diejenigen Bildberei-che durch Schraffur markiert sind, welche mit einer erhöhten Wahrscheinlichkeit zu einer Eigenfahrbahn gehören, auf welcher sich das Kraftfahrzeug gerade be-findet.
- Fig. 4: zeigt das Bild gemäß Fig. 2, wobei diejenigen Bildberei-che mit einem ausgefüllten Quadrat markiert sind, welche durch ein erfindungsgemäßes Verfahren einem Außenbereich der Straße zugeordnet wurden, und wo-bei diejenigen Bildbereiche mit einem nicht ausgefüll-ten Quadrat markiert sind, welche durch ein erfin-dungsgemäßes Verfahren einer Straße zugeordnet wurden.
- Fig. 5: zeigt das Bild gemäß Fig. 2 mit zwei als Straßenrand identifizierten Linien.

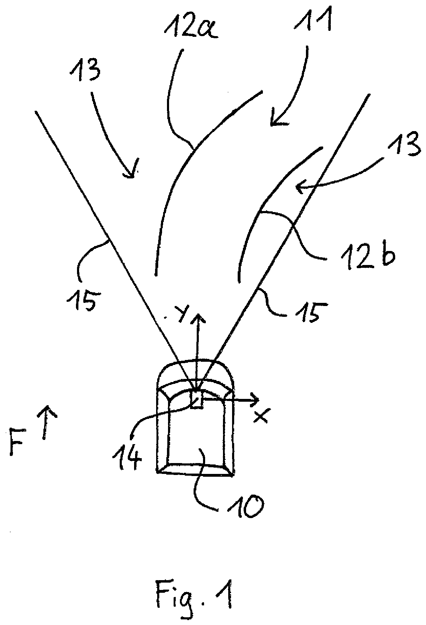

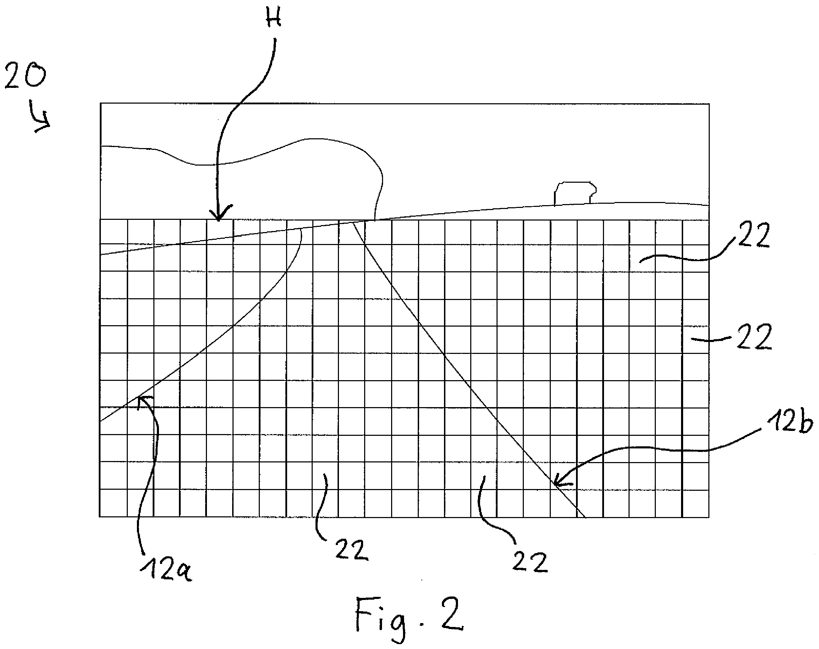

Wie in Fig. 1 dargestellt ist, bewegt sich ein Kraftfahrzeug 10 auf einer Straße 11 in einer Fahrtrichtung F vorwärts. Die Straße 11 ist durch einen linken Straßenrand 12a und durch einen rechten Straßenrand 12b von einem Außenbereich 13 abgegrenzt. In einem vorderen Bereich des Fahrzeughimmels ist eine Kamera 14 angebracht, welche fortlaufend Bilder des vor dem Kraftfahrzeug 10 befindlichen Verkehrsraums erfasst, wie durch die Sichtstrahlen 15 dargestellt ist. Durch die Kameraposition wird das Weltkoordinatensystem x, y aufgespannt. Weiterhin ist die Kamera 14 mit einer nachgeordneten Bildverarbeitungseinrichtung gekoppelt, welche in Fig. 1 jedoch nicht dargestellt ist. Ein Beispiel für ein von der Kamera 14 erfasstes Bild 20 des vor dem Kraftfahrzeug 10 befindlichen Verkehrsraums ist in Fig. 2 vereinfacht dargestellt.

Die Kamera 14 und die zugehörige Bildverarbeitungseinrichtung können insbesondere Teil eines Fahrerassistenzsystems, beispielsweise eines Systems zum Unterstützen des Spurhaltens (Spurhalteassistent, lane departure warning system, LDW) sein. Ein solches System erkennt und verfolgt die Straßenränder 12a, 12b anhand der von der Kamera 14 nacheinander, z.B. in regelmäßigen Zeitabständen, erfassten Bilder 20, wie nachfolgend genauer ausgeführt wird.

Zunächst wird in einem erfassten Bild 20 eine Horizontlinie H bestimmt. Es ist nicht erforderlich, dass diese Horizontlinie H mit großer Genauigkeit bestimmt wird. Vielmehr ist es bei vielen Anwendungen ausreichend, die Position der Horizontlinie H statisch aus bekannten, im Rahmen einer Kalibrierung der Kamera 14 ermittelten Parametern wie dem Neigungswinkel abzuleiten und dynamische Effekte wie Nickbewegungen des Kraftfahrzeugs 10 zu vernachlässigen. Bei Bedarf kann jedoch ein Modellieren und Kompensieren derartiger Effekte durchgeführt werden, um die Leistungsfähigkeit des Verfahrens erhöhen.

Derjenige Teil des Bildes 20, welcher sich unterhalb der Horizontlinie H befindet, wird wie in Fig. 2 dargestellt raster- oder gitterartig in 11 Zeilen und 23 Spalten unterteilt, so dass sich insgesamt 253 Bildbereiche oder "Patches" 22 ergeben. Die Feinheit der Unterteilung kann anwendungsabhängig festgelegt werden. Gemäß einer nicht dargestellten Ausführungsform werden beispielsweise 6 Zeilen und 52 Spalten zur Unterteilung gewählt. Es könnte auch vorgesehen sein, dass die einzelnen Bildbereiche 22 teilweise überlappen, um so die Robustheit des Verfahrens weiter zu steigern.

Für jeden der Bildbereiche 22 wird ein Satz von mehreren Bildmerkmalen oder Deskriptoren ermittelt, welche das Erscheinungsbild und/oder die Textur des Bildbereichs 22 beschreiben. Dieser Satz von Bildmerkmalen kann bei der nachfolgenden Berechnung als Vektor behandelt werden. Als Bildmerkmale können beispielsweise gradientenbasierte Histogramme und/oder die Koeffizienten einer Haar-Wavelet-Transformation ermittelt werden. Falls mehrere Kameras 14 an dem Kraftfahrzeug 10 angeordnet sind, könnte auch ein so genanntes Stereodisparations-Mapping als Bildmerkmal verwendet werden.

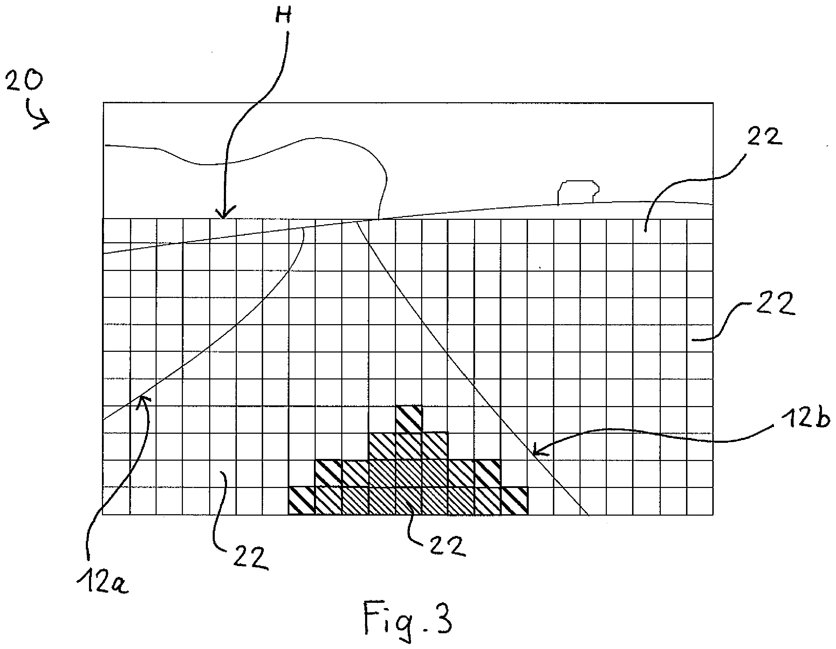

Es erfolgt ein Ermitteln des Erscheinungsbilds und der Textur der Eigenfahrbahn, auf welcher sich das Kraftfahrzeug 10 gerade befindet. Dieses Ermitteln wird online durchgeführt und erfolgt unter Verwendung von A-priori-Informationen, zum Beispiel von Kalibrierungsparametern der Kamera 14 sowie einer erfassten Geschwindigkeit und eines erfassten Gierwinkels des Kraftfahrzeugs 10. Dem Ermitteln des Erscheinungsbilds und der Textur der Eigenfahrbahn kann beispielsweise die Annahme zugrunde gelegt werden, dass sich das Kraftfahrzeug 10 auf einem Kreis mit konstantem Radius bewegt, welcher durch die aktuellen Werte für die Geschwindigkeit und den Gierwinkel gegeben ist, wobei dieser Kreis in jedes erfasste Bild 20 hineinprojiziert wird. Im Rahmen des Ermittlungsvorgangs wird ermittelt, welche Bildbereiche 22 mit hoher Wahrscheinlichkeit die Eigenfahrbahn darstellen und welche Bildbereiche 22 mit hoher Wahrscheinlichkeit den Außenbereich 13 darstellen. In Abhängigkeit von diesen Wahrscheinlichkeiten wird jedem Bildbereich 22 ein Gewicht zugeordnet, wobei mit Sicherheit die Eigenfahrbahn darstellende Bildbereiche 22 ein Gewicht von Eins erhalten und mit Sicherheit den Außenbereich 13 darstellende Bildbereiche 22 ein Gewicht von Null erhalten. Ein Tiefpassfilter kann verwendet werden, um diese scharfe Entscheidungsgrenze abzumildern. In Fig. 3 sind rein beispielhaft einzelne Bildbereiche 22 entsprechend ihres Gewichts in unterschiedlicher Weise schraffiert, wobei die enge Schraffur einem Gewicht von Eins entspricht.

Unter Verwendung des Satzes von Bildmerkmalen, welche für jeden Bildbereich 22 extrahiert wurden, und der A-priori-Schätzung darüber, welche Bildbereiche 22 zu der Eigenfahrbahn gehören, wird das optische Erscheinungsbild und die Textur der Eigenfahrbahn ermittelt. Hierfür wird sowohl eine zeitliche als auch eine räumliche statistische Analyse für alle entsprechend gewichteten Bildbereiche 22 durchgeführt. Beispielsweise wird die statistische Analyse anhand des empirischen Mittelwerts, der empirischen Varianz, der Schiefe, bestimmter höherer statistischer Momente, des Medians und/oder der Medianabweichung durchgeführt. Die statistische Analyse kann sich wahlweise lediglich auf einzelne zuletzt erfasste Bilder 20 oder auf eine Vielzahl von vorangehend erfassten und in einer Speichereinrichtung abgelegten Bildern 20 erstrecken. Die im Rahmen der statistischen Analyse berechneten Kenngrößen können unter Verwendung von Kalman-Filtern mit vorbestimmter Verstärkung zeitlich geglättet werden. Die durch die Anzahl der gespeicherten Bilder 20, welche der statistischen Analyse zugrunde liegen, gegebene Probengröße sowie die Verstärkung des Kalman-Filters können variiert werden, um so eine Vielzahl von Deskriptoren bereitzustellen.

Ausgehend von der statistischen Darstellung derjenigen Bildbereiche 22, welche gemäß der zuvor durchgeführten Schätzung der Eigenfahrbahn zugehören, kann dann für jeden Bildbereich 22 eines erfassten Bildes ein erweiterter Satz von Bildmerkmalen angegeben werden, welcher zusätzlich wenigstens eine Kenngröße enthält, welche die Abweichung zwischen dem Bildmerkmalsvektor des betreffenden Bildbereichs 22 und dem, vorzugsweise geglätteten, mittleren Bildmerkmalsvektor derjenigen Bildbereiche 22 wiederspiegelt, welche gemäß der zuvor durchgeführten Schätzung der Eigenfahrbahn zugehören. Da wie vorstehend erwähnt die Probengröße und die Verstärkung des Kalman-Filters variierbar sind, kann im Ergebnis eine Vielzahl von zusätzlichen Bildmerkmalen bereitgestellt werden, welche dazu verwendet werden können, zwischen der Straße 11 zugehörigen Bildbereichen 22 und dem Außenbereich 13 zugehörigen Bildbereichen 22 zu unterscheiden.

Anhand des erweiterten Satzes von Bildmerkmalen für jeden Bildbereich 22 wird ein Klassifizierer, welcher ein neuronales Netzwerk oder eine Support Vector Machine verwendet, dahingehend eingelernt, zwischen der Klasse der die Straße 11 darstellenden Bildbereiche 22 und der Klasse der den Außenbereich 13 darstellenden Bildbereiche 22 zu unterscheiden. Hierfür werden von dem Klassifizierer vorzugsweise bestimmte Bildmerkmale und/oder Kenngrößen aus der Gesamtmenge an Bildmerkmalen und Kenngrößen selektiert, welche für den Unterscheidungsprozess besonders geeignet sind. Durch eine derartige, auf dem Fachgebiet grundsätzlich bekannte Selektion kann der Rechenaufwand verringert werden. Das Einlernen des Klassifizierers erfolgt bevorzugt offline.

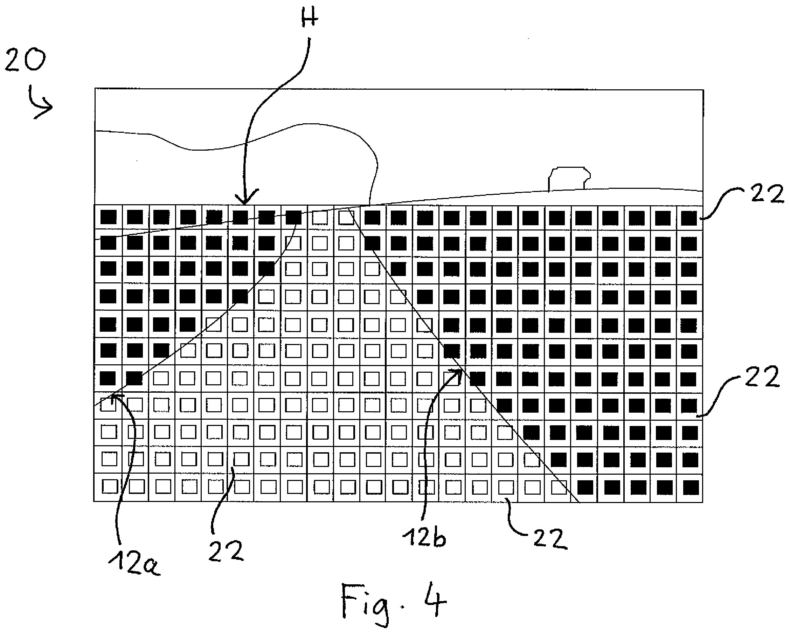

Mittels des offline eingelernten Klassifizierers kann dann im Online-Prozess jedem Bildbereich 22 eine Klassen-Kennzeichnung zugeordnet werden. Ein Vorteil des vorstehend beschriebenen Vorgehens besteht darin, dass aufwändige und instabile Online-Klassifizierverfahren vermieden werden. Das Ergebnis einer Klassifizierung ist in Fig. 4 dargestellt, wobei diejenigen Bildbereiche 22 mit einem ausgefüllten Quadrat gekennzeichnet sind, welche durch die Klassifizierung dem Außenbereich 13 zugeordnet wurden, und wobei diejenigen Bildbereiche 22 mit einem nicht ausgefüllten Quadrat markiert sind, welche durch die Klassifizierung der Straße 11 zugeordnet wurden.

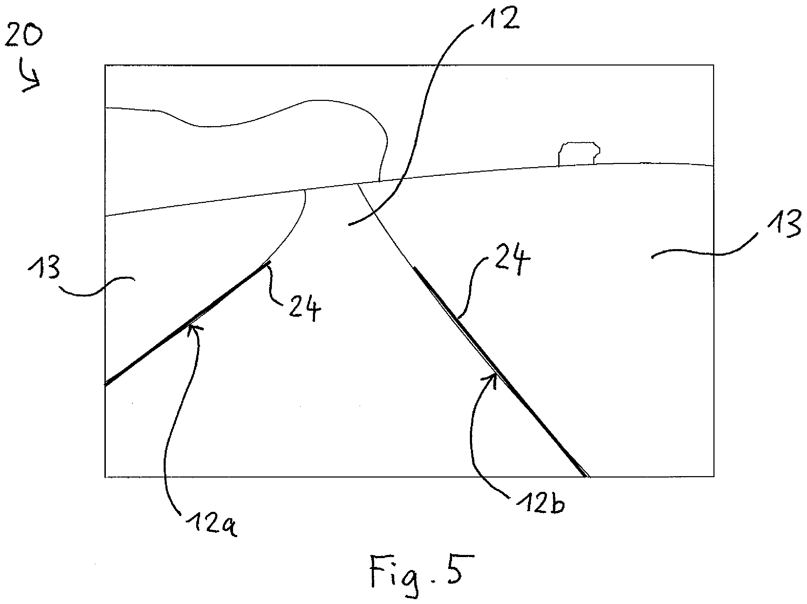

Anschließend wird eine zweidimensionale Radon-Transformation dazu verwendet, diejenige Hyperebene zu finden, welche am besten die der Straße 11 zugeordneten Bildbereiche 22 von den dem Außenbereich 13 zugeordneten Bildbereichen 22 trennt. Konkret werden hierzu lokale Maxima extrahiert, welche durch die Straßenränder 12a, 12b in der Ableitung der Radon-Transformation gebildet sind. Zwei Linien 24, welche auf diese Weise als Näherung der Straßenränder 12a, 12b ermittelt wurden, sind in Fig. 5 gezeigt.

Die so identifizierten Straßenränder 12a, 12b können dann unter Verwendung nachfolgend erfasster Bilder 20 mittels eines Tracking-Verfahrens verfolgt werden. Ein solches Tracking-Verfahren kann insbesondere einen Kalman-Filter verwenden, wie auf dem Fachgebiet grundsätzlich bekannt ist. Das Tracking-Verfahren, welches zusätzlich zu dem vorstehend beschriebenen Verfahren durchgeführt wird und die identifizierten Straßenränder 12a, 12b in ähnlicher Weise als Eingangsgrößen verwendet wie bekannte Fahrspurerkennungsverfahren die mittels eines Filters identifizierten Fahrspurmarkierungen, sorgt für eine hohe Robustheit bei der Ermittlung der Position des Straßenrands.

Prinzipiell könnte auch eine mehrfache Radon-Transformation anhand von Unterbereichen der Bildbereiche 22 durchgeführt werden, beispielsweise eine Radon-Transformation in der unteren Hälfte und eine Radon-Transformation in der oberen Hälfte jedes Bildbereichs 22. Hierbei könnten mehrfache Hyperebenen gefunden werden, welche dann durch Anpassung an ein komplexes Modell für den Straßenverlauf, beispielsweise an eine Parabel, eine Klothoidenkurve oder einen Spline, zusammengesetzt werden.

Insgesamt können auf die beschriebene Weise Straßenränder 12a, 12b in erfassten Bildern 20 zuverlässig erkannt werden, ohne dass hierfür scharfe und kontrastreiche Fahrbahnmarkierungen erforderlich sind.

### Bezugszeichenliste

- 10: Kraftfahrzeug
- 11: Straße
- 12a: linker Straßenrand
- 12b: rechter Straßenrand
- 13: Außenbereich
- 14: Kamera
- 15: Sichtstrahlen
- 20: Bild
- 22: Bildbereich
- 24: Linie

- F: Fahrtrichtung
- H: Horizontlinie

## Patentansprüche

1. Verfahren zum Identifizieren eines Straßenrands (12a, 12b) mittels einer an einem Kraftfahrzeug (10) angeordneten Bilderfassungseinrichtung (14), wobei mittels der Bilderfassungseinrichtung (14) nacheinander jeweils mehrere Bildpunkte umfassende Bilder (20) eines vor dem Kraftfahrzeug (10) befindlichen Verkehrsraumes erfasst werden, wobei
wenigstens ein Teil eines erfassten Bildes (20) in mehrere Bildbereiche (22) unterteilt wird,
für jeden Bildbereich (22) anhand von Intensitätswerten der dem Bildbereich (22) zugeordneten Bildpunkte wenigstens ein Bildmerkmal ermittelt wird,
für jeden Bildbereich (22) anhand von A-priori-Informationen eine Wahrscheinlichkeit ermittelt wird, mit welcher der Bildbereich (22) zu einer Eigenfahrbahn gehört, auf welcher sich das Kraftfahrzeug (10) gerade befindet,
in Abhängigkeit von den Bildmerkmalen und Wahrscheinlichkeiten aller Bildbereiche (22) ein charakteristischer Wert für das oder jedes Bildmerkmal eines Bildbereichs (22) ermittelt wird, das für die Eigenfahrbahn charakteristisch ist,
jeder Bildbereich (22) anhand eines Vergleichs des für diesen Bildbereich ermittelten Bildmerkmals mit dem entsprechend ermittelten charakteristischen Wert einer in dem Verkehrsraum befindlichen Straße (11) oder einem nicht zu der Straße (11) gehörenden Außenbereich (13) des Verkehrsraums zugeordnet wird, und
durch die Zuordnung der Bildbereiche (22) ein Straßenrand (12a, 12b) identifiziert wird,
**dadurch gekennzeichnet, dass**
als A-priori-Informationen Parameter der Bilderfassungseinrichtung (14), eine erfasste Geschwindigkeit des Kraftfahrzeugs (10) und ein erfasster Gierwinkel des Kraftfahrzeugs (10) verwendet werden.

2. Verfahren nach Anspruch 1,
**dadurch gekennzeichnet, dass**
für jeden Bildbereich (22) ein das Erscheinungsbild und/oder die Textur des Bildbereichs beschreibendes Bildmerkmal ermittelt wird.

3. Verfahren nach Anspruch 1 oder 2,
**dadurch gekennzeichnet, dass**
für jeden Bildbereich (22) ein Satz von mehreren Bildmerkmalen ermittelt wird, wobei das Zuordnen der Bildbereiche (22) anhand eines Vergleichs der Bildmerkmale eines Satzes von Bildmerkmalen mit jeweiligen charakteristischen Werten erfolgt.

4. Verfahren nach Anspruch 3,
**dadurch gekennzeichnet, dass**
als Bildmerkmale die Koeffizienten einer auf die Intensitätswerte der dem betreffenden Bildbereich zugeordneten Bildpunkte angewendeten Zeit-Frequenz-Transformation, insbesondere einer Haar-Wavelet-Transformation, ermittelt werden.

5. Verfahren nach zumindest einem der vorstehenden Ansprüche,
**dadurch gekennzeichnet, dass**
zum Ermitteln des charakteristischen Werts eines Bildmerkmals eine statistische Analyse der jeweiligen Bildmerkmale aller Bildbereiche (22) eines Bildes (20) und/oder der jeweiligen Bildmerkmale von Bildbereichen (22) mehrerer nacheinander erfasster Bilder (20) durchgeführt wird.

6. Verfahren nach Anspruch 5,
**dadurch gekennzeichnet, dass**
bei dem Durchführen der statistischen Analyse ein Mittelwert, eine Standardabweichung, eine Varianz und/oder ein Moment der Verteilung der jeweiligen Bildmerkmale für einander entsprechende Bildbereiche (22) mehrerer nacheinander erfasster Bilder (20) ermittelt wird.

7. Verfahren nach zumindest einem der vorstehenden Ansprüche,
**dadurch gekennzeichnet, dass**
das erfasste Bild (20) oder der Teil des erfassten Bildes (20) gitter-oder rasterartig unterteilt wird.

8. Verfahren nach zumindest einem der vorstehenden Ansprüche,
**dadurch gekennzeichnet, dass**
in einem zu unterteilenden Bild eine Horizontlinie (H) bestimmt wird und nur derjenige Teil des Bildes (20) in mehrere Bildbereiche (22) unterteilt wird, der sich unterhalb der bestimmten Horizontlinie (H) befindet.

9. Verfahren nach zumindest einem der vorstehenden Ansprüche,
**dadurch gekennzeichnet, dass**
das Bild (20) oder der Teil des Bildes in wenigstens 100 Bildbereiche (22) unterteilt wird.

10. Verfahren nach zumindest einem der vorstehenden Ansprüche,
**dadurch gekennzeichnet, dass**
das Zuordnen der Bildbereiche (22) mittels eines Klassifizierers durchgeführt wird.

11. Verfahren nach Anspruch 10,
**dadurch gekennzeichnet, dass**
der Klassifizierer offline eingelernt wird.

12. Verfahren nach Anspruch 10 oder 11,
**dadurch gekennzeichnet, dass**
der Klassifizierer ein neuronales Netz und/oder eine Support Vector Machine verwendet.

13. Verfahren nach zumindest einem der vorstehenden Ansprüche,
**dadurch gekennzeichnet, dass**
der Verlauf des Straßenrands (12a, 12b) der Straße (11) geschätzt wird, indem eine Trennlinie ermittelt wird, welche im Wesentlichen zwischen den der Straße (11) zugeordneten Bildbereichen (22) und den dem Außenbereich zugeordneten Bildbereichen (22) eines Bildes (20) verläuft.

14. Verfahren nach Anspruch 13,
**dadurch gekennzeichnet, dass**
das Schätzen des Verlaufs des Straßenrands (12a, 12b) unter Verwendung einer Radon-Transformation erfolgt.

## Claims

1. Method for identifying an edge of a road (12a, 12b) by means of an image-capturing device (14) arranged on a vehicle (10), wherein images (20) of a traffic space located in front of the vehicle (10) are successively captured by means of the image-capturing device (14), each image (20) having a plurality of image points, wherein
at least part of a captured image (20) is subdivided into a plurality of image areas (22),
at least one image feature is determined for each image area (22) using intensity values of the image points associated with the image area (22),
a probability that the image area (22) belongs to the own lane on which the vehicle (10) is currently located is determined for each image area (22) using A-priori information,
depending on the image features and probabilities of all image areas (22) a characteristic value for the or each image feature of an image area (22) is determined which is characteristic for the own lane,
each image area (22), using a comparison of the image feature determined for this image area and the correspondingly determined characteristic value is assigned to a road (11) within the traffic space or an outer area (13) of the traffic space not belonging to the road (11), and
an edge (12a, 12b) of the road is identified by the assignment of the image areas (22),
**characterized in that**
parameters of the image-capturing device (14), a detected velocity of the vehicle (10) and a detected yaw angle of the vehicle (10) are used as A-priori information.

2. Method according to claim 1,
**characterized in that**
for each image area (22) an image feature describing the appearance and/or the texture of the image area is determined.

3. Method according to Claim 1 or 2,
**characterized in that**
a set of a plurality of image features is determined for each image area (22), the image areas (22) being assigned using a comparison of the image features of a set of image features with respective characteristic values.

4. Method according to Claim 3,
**characterized in that**
the coefficients of a time-frequency transformation, in particular of a Haar wavelet transformation, applied to the intensity values of the image points assigned to the relevant image area are determined as image features.

5. Method according to at least one of the preceding claims,
**characterized in that**
for determination of the characteristic value of an image feature, a statistical analysis of the respective image features of all image areas (22) of an image (20) and/or the respective image features of image areas (22) of a plurality of successively captured images (20) is carried out.

6. Method according to claim 5,
**characterized in that**
when carrying out the statistical analysis, a mean value, a standard deviation, a variance and/or a moment of the distribution of the respective image features are determined for mutually corresponding image areas (22) of a plurality of successively captured images (20).

7. Method according to at least one of the preceding claims,
**characterized in that**
the captured image (20) or the part of the captured image (20) is subdivided in a grid-like or raster-like manner.

8. Method according to at least one of the preceding claims,
**characterized in that**
a horizontal line (H) is determined in an image to be divided, and only that part of the image (20) is subdivided into a plurality of image areas (22) which is located below the determined horizontal line (H).

9. Method according to at least one of the preceding claims,
**characterized in that**
the image (20) or the part of the image is subdivided into at least 100 image areas (22).

10. Method according to at least one of the preceding claims,
**characterized in that**
the image areas (22) are assigned by means of a classifier.

11. Method according to claim 10,
**characterized in that**
the classifier is learned offline.

12. Method according to claim 10 or 11,
**characterized in that**
the classifier uses a neural network and/or a support vector machine.

13. Method according to at least one of the preceding claims,
**characterized in that**
the course of the road edge (12a, 12b) of the road (11) is estimated by determining a dividing line which essentially extends between the image areas (22) assigned to the road (11) and the image areas (22) of an image (20) which are assigned to the outer area.

14. Method according to claim 13,
**characterized in that**
the course of the road edge (12a, 12b) is estimated using a radon transformation.

## Revendications

1. Procédé d'identification d'un bord de route (12a, 12b) au moyen d'un système d'acquisition d'image (14) agencé sur un véhicule automobile (10), dans lequel on acquiert au moyen du système d'acquisition d'image (14) successivement des images (20) comprenant chacune plusieurs pixels d'un espace de circulation situé en avant du véhicule automobile (10),
dans lequel
une partie au moins d'une image acquise (20) est subdivisée en plusieurs zones d'image (22),
pour chaque zone d'image (22), on détermine au moins une propriété d'image en se basant sur des valeurs d'intensité des pixels associés à la zone d'image (22),
pour chaque zone d'image (22), on détermine une probabilité en se basant sur des informations à priori, selon laquelle la zone d'image (22) appartient à une propre voie de circulation sur laquelle le véhicule automobile (10) se trouve actuellement,
en fonction des propriétés d'image et des probabilités de toutes les zones d'image (22), on détermine une valeur caractéristique pour la ou chaque propriété d'image d'une zone d'image (22) qui est caractéristique pour la propre voie de circulation,
en se basant sur une comparaison de la propriété d'image déterminée pour cette zone d'image à une valeur caractéristique déterminée en correspondance, on associe chaque zone d'image (22) à une route (11) située dans l'espace de circulation et à une zone extérieure (13) de l'espace de circulation qui n'appartient pas à la route (11), et
par association des zones d'image (22), on identifie un bord de route (12a, 12b),
**caractérisé en ce que**
on utilise à titre d'informations à priori des paramètres du système d'acquisition d'image (14), une vitesse détectée du véhicule automobile (10) et un angle de lacet détecté du véhicule automobile (10).

2. Procédé selon la revendication 1,
**caractérisé en ce que**
on détermine pour chaque zone d'image (22) une propriété d'image qui décrit l'aspect visuel et/ou la texture de la zone d'image.

3. Procédé selon la revendication 1 ou 2,
**caractérisé en ce que**
on détermine pour chaque zone d'image (22) un lot de plusieurs propriétés d'image, et on effectue l'association des zones d'image (22) en se basant sur une comparaison des propriétés d'image d'un lot de propriétés d'image à des valeurs caractéristiques respectives.

4. Procédé selon la revendication 3,
**caractérisé en ce que**
on détermine à titre de propriétés d'image les coefficients d'une transformation temps-fréquence, en particulier d'une transformation à ondelettes, appliquée aux valeurs d'intensité des pixels associés à la zone d'image concernée.

5. Procédé selon l'une au moins des revendications précédentes,
**caractérisé en ce que**
pour déterminer la valeur caractéristique d'une propriété d'image, on réalise une analyse statistique des propriétés d'image respectives de toutes les zones (22) d'une image (20) et/ou des propriétés d'image respectives de zones (22) de plusieurs images (20) acquises successivement.

6. Procédé selon la revendication 5,
**caractérisé en ce que**
lorsque l'on réalise l'analyse statistique, on détermine une moyenne, un écart standard, une variance et/ou un instant de la répartition des propriétés d'image respectives pour des zones d'image (22) qui se correspondent de plusieurs images (20) acquises successivement.

7. Procédé selon l'une au moins des revendications précédentes,
**caractérisé en ce que**
l'image acquise (20) ou une partie de l'image acquise (20) est subdivisée en forme de grille ou de trame.

8. Procédé selon l'une au moins des revendications précédentes,
**caractérisé en ce que**
dans une image à subdiviser, on définit une ligne horizontale (H) et on subdivise en plusieurs zones (22) uniquement cette partie de l'image (20) qui se trouve au-dessous de la ligne horizontale définie (H).

9. Procédé selon l'une au moins des revendications précédentes,
**caractérisé en ce que**
on subdivise l'image (20) ou la partie de l'image en au moins 100 zones d'image (22).

10. Procédé selon l'une au moins des revendications précédentes,
**caractérisé en ce que**
on réalise l'association des zones d'image (22) au moyen d'un classificateur.

11. Procédé selon la revendication 10,
**caractérisé en ce que**
on fait apprendre le classificateur par voie hors ligne.

12. Procédé selon la revendication 10 ou 11,
**caractérisé en ce que**
le classificateur utilise un réseau neuronal et/ou une machine à vecteurs de support.

13. Procédé selon l'une au moins des revendications précédentes,
**caractérisé en ce que**
on estime le tracé du bord de route (12a, 12b) de la route (11) en déterminant une ligne de séparation qui s'étend sensiblement entre les zones d'image (22) associées à la route (11) et les zones (22) d'une image (20) associées à la zone extérieure.

14. Procédé selon la revendication 13,
**caractérisé en ce que**
on réalise l'estimation du tracé du bord de route (12a, 12b) en utilisant une transformation de Radon.
